# EUROPÄISCHE PATENTANMELDUNG

(11) **EP 0 761 850 A1**
(43) Veröffentlichungstag der Anmeldung: **12.03.1997**
(21) Anmeldenummer: 96810573.4
(22) Anmeldetag: 30.08.1996
(51) Int. Cl.: D01G 15/36, H02P 1/58, H02P 3/18

(54) **Verfahren zum Hochlaufen und Abbremsen einer Karde und Schaltungsanordnung zum Betreiben einer Karde**

(30) Priorität: 05.09.1995 CH 2516/95
(71) Anmelder: MASCHINENFABRIK RIETER AG, 8406 Winterthur (CH)
(72) Erfinder: Hartmeier, Werner, 8307 Effretikon (CH); Carelle, Gustavo, 9536 Schwarzenbach (CH); Spycher, Roland, 9244 Niederuzwil (CH)

(57) **Zusammenfassung**

Bei einer Karde gelangt ein Faserstrom zur Speisewalze, von dieser über den Vorreisser auf die Trommel (12), welche mit dem mit dem Wanderdeckel zusammenwirkt, und anschliessend zum Abnehmer (2), welcher den Faserstrom wieder von der Trommel abnimmt und zur Bandbildung im Auslauf weiterleitet. Dabei weisen die Speisewalze, die Trommel (12) mit Vorreisser und Wanderdeckel und der Abnehmer (2) je einen eigenen Elektromotor (M1,M2), einen Drehstrom-Asynchron-Motor, auf. Diese weisen typische Leistungsmerkmale auf und zwar hat der Antrieb einer Speisewalze eine Leistung von etwa 0.75 kW, der einer Trommel (1) von etwa 4.0 bis 7.5 kW und der eines Abnehmers von etwa 2.2 kW. Besondere Anforderungen und Bedingungen stellt einzig der Antrieb der Trommel (12), da sie eine sehr hohe Masse in der Grössenordnung von 500 bis 1000 kg bei einem Durchmesser von gut 0.8 bis 1.3 m und im Betrieb eine Drehzahl von 300 bis 850 U/min. aufweist. Es wird nun ein Verfahren und eine Schaltungsanordnung vorgeschlagen, welche diese Eigenschaften im betrieblichen Ablauf berücksichtigt. Dabei wird der Motor (M1) für den Hochlauf der Trommel (12) mit einem ersten Schalter (6) an den Frequenzumrichter (121) geschaltet. Sobald die Trommel (12) annähernd ihre Betriebsdrehzahl erreicht hat, wird der Motor (M1) über einen zweiten Schalter (7) direkt an das Netz (5) angeschlossen, während der Motor (M2) des Abnehmers (2) über den Schalter (6) gesteuert wird. Es kann dadurch auf einen separaten Frequenzumrichter mit eigener Leistungselektronik für den entscheidenden Antrieb der Trommel verzichtet werden.

## Beschreibung

Die Erfindung betrifft ein Verfahren und eine Schaltungsanordnung zum Hochlaufen und/oder Abbremsen einer Karde nach dem Oberbegriff der unabhängigen Patentansprüche.

Als Antriebssystem betrachtet, weist eine Karde grundsätzlich drei Funktionselemente auf. Ein Faserstrom gelangt zur Speisewalze, von dieser über den Vorreisser auf die Trommel, welche mit dem Wanderdeckel zusammenwirkt, und anschliessend zum Abnehmer, welcher den Faserstrom wieder von der Trommel abnimmt und zur Bandbildung im Auslauf weiterleitet. Dabei weisen die drei Funktionseinheiten die Speisewalze, die Trommel mit Vorreisser und Wanderdeckel und der Abnehmer bzw. Auslauf je einen eigenen Elektromotor, einen Drehstrom-Asynchron-Motor, auf. Diese drei Funktionseinheiten weisen ganz verschiedene Eigenschaften, wie beispielsweise Drehzahl und Gewicht (bzw. Massenträgheit) auf und benötigen folglich ganz verschiedene installierte Motorleistungen. Die drei Funktionseinheiten entsprechen drei unterschiedliche, separate Antriebsgruppen. Typisch für eine erste Antriebsgruppe umfassend den Antrieb einer Speisewalze ist eine Leistung von 0.75 kW, für eine zweite Antriebsgruppe umfassend die Trommel samt Vorreisser und Wanderdeckel eine Leistung von 4 bis 7.5 kW und für eine dritte Antriebsgruppe, auch Auslaufgruppe genannt, umfassend Abnehmer samt Auslauf, eine Leistung von 2.2kW.

Jede Gruppe stellt spezielle eigene Anforderungen an ihren Antrieb. Die Trommel weist z.B. eine sehr hohe Masse in der Grössenordnung von etwa 500 kg bis 1000 kg auf. Sie hat einen Durchmesser von im Bereich von etwa 0.8 m bis 1.3 m und im Betrieb eine Drehzahl von 300 bis 850 U/min. Dies ergibt eine betriebliche Umfangsgeschwindigkeit von 1200 bis 2100 m/min. Das Beschleunigen dieser Masse auf die Betriebsdrehzahl und das Kardieren bei dieser Geschwindigkeit benötigt eine relativ grosse Leistung des Antriebes und der Energiespeisung/Steuerung. Die Trommel sollte bei Betriebsunterbrüchen auch in kurzer Zeit angehalten werden können, wozu sie elektrisch gebremst wird. Aus diesen Gründen wird heute zur Steuerung und Speisung der Antriebe für jeden Motor entweder ein eigener Frequenzumrichter bekannter Art oder eine relativ komplizierte Schaltung verwendet.

### Stand der Technik:

Mit dem Problem des Hochlaufens, bzw. Abbremsens von Karden mit Hilfe elektronischer Mittel beschäftigen sich beispielsweise die Dokumente: EP-A-431 486, CH-A-676 009, DD-240569, DE-U-94 07 961 und DE-U-91 03 127 sowie EP-A-701 012, die vor dem Prioritätsdatum der vorliegenden Anmeldung nicht veröffentlicht wurde. Ferner ist aus der EP-A-0557 242 ein Verfahren bekannt, bei dem die Beschleunigung eines Krempel- oder Kardentambours stufenweise, entsprechend der Polumschaltbarkeit eines polumschaltbaren Motors, bis zum Erreichen der Betriebsdrehzahl, bzw. bis zum Erreichen des Stillstandes des Tambours, erfolgt. Hierbei wird ein 4-/2-poliger Asynchron-Drehstrommotor in einer ersten Beschleunigungsstufe in einer Dreieck-Schaltung im 4-poligen Betrieb beschleunigt und anschliessend in einer 2-poligen Doppel-Stern-Schaltung auf die Betriebsdrehzahl weiter beschleunigt.

Die Lösung, bei der jede Antriebseinheit, nämlich der Speisewalzenantrieb, der Trommelantrieb und der Abnehmerantrieb je mit einem separaten Frequenzwandler versehen ist, zeigt, die DD-A-224626. Für die Anlauf- und Bremsphase wird in die Stromzuführung jedes Antriebsmotores anstelle des jeweiligen Frequenzwandlers ein spezieller Regelkreis mit Wechselstromsteller eingeschaltet, der nach Erreichen der Betriebsdrehzahl bzw. des Stillstandes wieder abschaltbar ist. Diese Lösung ist immer noch enorm aufwendig und entsprechend teuer.

### Die Erfindung:

Aufgabe der Erfindung ist es, den Aufwand an erforderlicher Leistungselektronik zum Betrieb einer Karde zu verringern und deren Kosten zu reduzieren.

Diese Aufgabe wird durch die in den Patentansprüchen angegebene Erfindung gelöst. Es kann dadurch sowohl auf einen separaten Frequenzumrichter mit eigener Leistungselektronik für jeden einzelnen Antrieb von Trommel und Abnehmer als auch auf aufwendige Schaltungen verzichtet werden.

Hierbei wird von der Erkenntnis Gebrauch gemacht, dass während des Hochlaufens die erforderliche Leistung für die zweite Antriebsgruppe umfassend Trommel, Vorreisser und Wanderdeckel, unterhalb der Nennleistung liegt, weil in dieser Zeit nicht kardiert wird. Daher kann die zweite Antriebsgruppe mit dem Umrichter der dritten Antriebsgruppe hochgefahren werden, ohne in dessen Leistungsgrenzbereich zu kommen.

CH-C-672 326 beschreibt eine Ringspinnmaschine, die mit einem Frequenzumrichter versehen ist. Der Frequenzumrichter kann für den Hauptantrieb eingesetzt werden und dann während des sogenannten ,,Kopsabziehens", beim Stillstehen des Hauptantriebes zum Antreiben eines Hilfsgerätes eingesetzt werden. Es sind in dieser Schrift keine Vorschläge enthalten, die für den Kardenantrieb anwendbar wären.

### Verwandte Anmeldung:

EP-A-671 355 (die nicht vor dem Prioritätsdatum der vorliegenden Anmeldung veröffentlicht wurde), bezieht sich auf eine faserbandliefernde Maschine und eine dieser Maschine zugeordnete Bandablage (Kannenpresse, Kannenstock), wobei die Maschine mit einem Antrieb für die bandliefernden Elemente und die Bandablage mit einem eigenen Antrieb versehen sind. Die Maschine ist insbesondere eine Karde.

Solche Anordnungen sind z.B aus EP-A-512 683, DE-C-37 34 425 und WO 92/04266 bekannt. Die Vorteile des eigenen Antriebes für die Bandablage (sogenannte "autonome Bandablage") sind in DE-C-37 34 425 aufgeführt. Der Antrieb für die Bandablage wird normalerweise anhand eines Signals von einem Sensor gesteuert, das die Bandlieferung zwischen dem Kardenauslauf und der Bandablage abtastet. Mittels dieses Signals wird ein für den Antrieb der Bandablage eigens vorgesehenes Regelgerät gesteuert. Die bekannten Vorrichtungen arbeiten einwandfrei, sind aber aufwendig, entweder weil sie zusätzliche Elemente erfordern oder weil die Elemente teuer sind oder beides.

Wie schon erwähnt beruht ein modernes Antriebssystem für eine Textilmaschine auf der Frequenzumformertechnik - siehe zum Beispiel "Drehstrommotoren mit Frequenzumrichtern für Textilmaschinen" (Textil Praxis International 1992, Januar, Seite 37,38). Überraschenderweise hat es sich herausgestellt, dass solche Antriebssysteme erweitert werden können, um die Bandablage miteinzubeziehen. Dies ist deshalb überraschend, weil feststeht, dass in der Bandstrecke zwischen der Maschine und der Bandablage Fehlverzüge besonders leicht erzeugt werden können, und angenommen wird, dass Fehlverzüge ohne Sondermassnahmen im Antriebssystem nicht zu vermeiden sind.

Gemäss EP-A-671 355 umfasst sowohl der Antrieb für die bandliefernden Elemente der Maschine, wie auch der Antrieb für die Bandablage, mindestens je einen frequenzgesteuerten Drehstrommotor, und es ist zum Speisen dieser Motoren ein gemeinsamer Frequenzumrichter oder ein Frequenzumrichterpaar vorgesehen, wobei die Umrichter eines Paares miteinander gekoppelt sind, um die gleiche Ausgangsfrequenz bzw. Ausgangsfrequenzen in einem vorgebbaren Verhältnis vorzuweisen. Die Drehstrommotoren sind vorzugsweise Asynchronmotoren, d.h. Motoren, die wegen Schlupf eine lastabhängige Drehzahlcharakteristik bei konstanter Speisefrequenz aufweisen. Eine solche Charakteristik ist (trotz des Risikos eines Fehlverzuges) deshalb verwendbar, weil es sich herausstellt, dass die zu erwartenden Laständerungen im Betrieb derart ähnliche Verhaltensweisen an den massgebenden Stellen aufweisen, dass die Differenz der relativen Drehzahlfehler (d.h. der Drehzahlunterschied gegenüber den Synchrondrehzahlen) in der Praxis innerhalb sehr engen Grenzen (akzeptablen Toleranzen) bleibt.

Die Erfindung nach EP-A-671 355 sieht dementsprechend ein Antriebssystem für eine faserbandherstellende Textilmaschine vor, dadurch gekennzeichnet, dass sowohl die bandliefernden Elemente wie auch die Bandablage durch Motoren angetrieben werden, die eine lastabhängige Drehzahlcharakteristik aufweisen. Das Antriebssystem umfasst vorzugsweise eine Motorensteuerung, die derart ausgelegt ist, dass allfälliger, im Betrieb entstehender Motorenschlupf innerhalb vorgebbaren Grenzen bleibt. Die Steuerung weist vorzugsweise einen steuerbaren Leistungsteil auf, welcher die genannten Motoren speist. Der Leistungsteil ist vorzugsweise bezüglich der Frequenz der dadurch gelieferten elektrischen Energie steuerbar, er umfasst zum Beispiel mindestens einen Frequenzumrichter, und die genannten Motoren sind dann vorzugsweise über die Speisefrequenz steuerbare Motoren.

Aus Kostengründen wird man normalerweise Drehstromasynchronmotoren (Kurzschlussläufermotoren) wählen, wobei die Verwendung von anderen, über die Speisefrequenz steuerbaren Motoren (z.B Reluktanz- oder sogar Synchronmotoren) nicht ausgeschlossen ist. Der bevorzugte Motorentyp ist der sogenannte Getriebemotor. Die effektive Drehzahl eines solchen Motors wird sowohl durch die Speisefrequenz wie auch durch die Über- bzw. Untersetzung des dem Motor zugeordneten Getriebes beeinflusst. Das Getriebe kann Wechselstellen umfassen, so dass die effektive Drehzahl bei gegebener Speisefrequenz eingestellt werden kann. Das Gesamtsystem ist aber vorzugsweise derart angeordnet, dass keine Wechselstellen erforderlich sind.

Der Antrieb für die Bandablage kann mehrere Motoren umfassen, zum Beispiel einen ersten Motor für die Bandeinzugswalzen und das Trichterrad sowie einen zweiten Motor für den Drehteller. Es kann aber in der Bandablage nur ein einziger Motor vorgesehen werden (vgl. DE-C-37 34 425), wobei dann eine mechanische Übertragung der Motorenleistung zwischen Ober- und Unterteil der Bandablage erforderlich wird.

Die Erfindung nach EP-A-671 355 ist von besonderer Bedeutung in der Karde, weil die akzeptablen Toleranzen für Fehlverzüge im Zwischenprodukt dieser Maschine breiter sind, als sie zum Beispiel in Zusammenhang mit einer geregelten Strecke der zweiten Passage sind.

In der Karde sind gegenwärtig mit Liefergeschwindigkeiten zwischen 10 M/min und 300 M/min zu rechnen. Der Faserbandtiter liegt normalerweise im Bereich 3,5 bis 6,5 ktex. Die Antriebsmotoren der bandliefernden Elemente der Karde (des Auslaufes) weisen Drehzahlen zwischen 150 und 4500 U/min bei Speisefrequenzen zwischen 5 und 150 Hertz auf. Die erforderliche Ausgangsleistung eines Frequenzumrichters, um sowohl den Kardenauslauf wie auch die Bandablage mit Energie zu versorgen, liegt im Bereich 1,5 bis 3 KW.

Beispiele beider Erfindungen werden nun anhand der in den Figuren der Zeichnungen dargestellten Ausführungen näher erklärt. Es zeigt:
- Fig. 1: eine schematische Seitenansicht einer Kardeneinheit, bestehend aus einer Materialzufuhrvorrichtung, der Karde selbst und einer der Karde zugeordneten Bandablage,
- Fig. 2: eine schematische Seitenansicht der Arbeitswalzen im Kardenauslauf,
- Fig. 3: eine schematische Ansicht der bandbildenden Elemente im Auslauf,
- Fig. 4: eine schematische isometrische Darstellung der Bandablage,
- Fig. 5: eine schematische Darstellung der wesentlichen Arbeitselemente der Bandablage,
- Fig. 6: eine schematische Darstellung einer ersten Variante nach EP-A-671 355,
- Fig. 6A: ein Detail aus Fig. 6,
- Fig. 7: eine zweite Variante nach EP-A-671 355, und
- Fig. 8: schematisch ein Schaltschema nach der nun vorliegenden Erfindung.

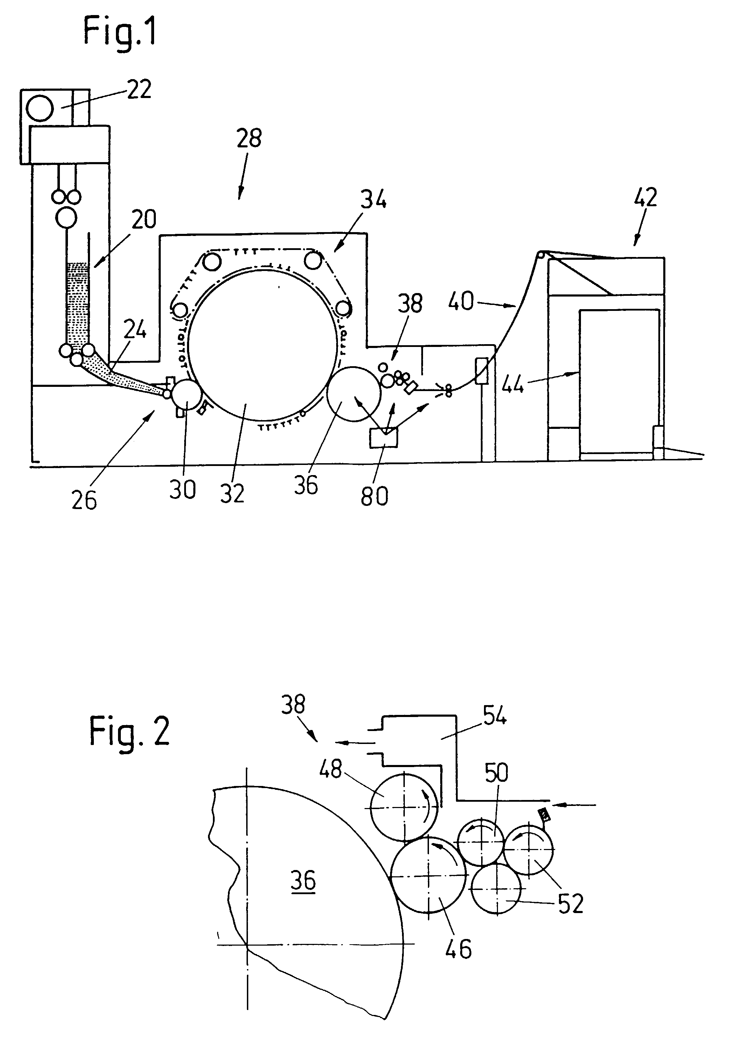

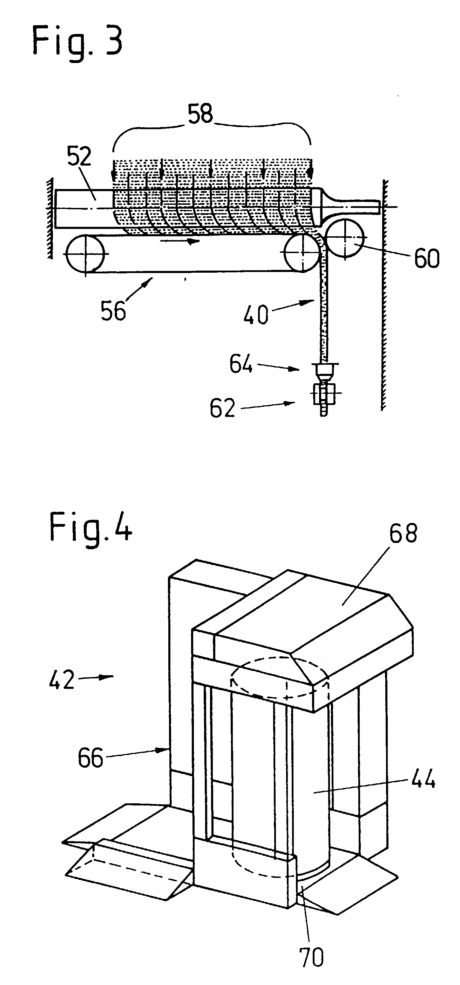

Die in Figur 1 dargestellte Kardeneinheit umfasst einen Füllschacht 20, der Fasermaterial aus einem schematisch angedeuteten Flockentransportsystem 22 erhält und daraus eine Watte 24 bildet, welche an die Speisevorrichtung 26 der Karde 28 weitergeleitet wird. Die Karde selbst ist konventioneller Bauart mit einem Briseur 30, Tambour 32, Wanderdeckelgerät 34 und Abnehmer 36, der Teil des Auslaufes 38 bildet. Der Auslauf wird nachfolgend anhand der Figuren 2 und 3 näher erklärt. Im Kardenauslauf wird ein Faserband 40 gebildet, das an die Bandablage (Kannenpresse bzw. den Kannenstock) 42 geliefert wird, wo das Band in Windungen in einer Kanne 44 abgelegt wird.

Der Auslauf nach Fig. 2 umfasst zusammen mit dem Abnehmer 36 eine Abnahmewalze 46, Putzwalze 48, Übertragungswalze 50 und ein Klemmwalzenpaar 52. Das Bezugszeichen 54 weist auf eine Absaugung, die aber in Zusammenhang mit dieser Erfindung keine Rolle spielt und nicht weiter beschrieben wird.

Eine Klemmwalze 52 ist nochmals in Fig. 3 von oben gezeigt, und zwar in Zusammenhang mit einem sogenannten Querband 56, wodurch das vom Klemmwalzenpaar gelieferte Faservlies 58 seitlich abgelenkt und mittels einer Umlenkwalze 60 zu einem Faserband 40 (siehe auch Fig. 1) zusammengefasst wird (z.B. nach EP-A-549 534). Das Faserband 40 wird mittels eines Stufenwalzenpaares 62 durch einen Trichter 64 abgezogen und mit einer vorgegebenen Geschwindigkeit aus der Karde (Maschine) 28 geliefert. Eine dazu geeignete Stufenwalzenpaareinheit ist in EP-A-370 232 gezeigt.

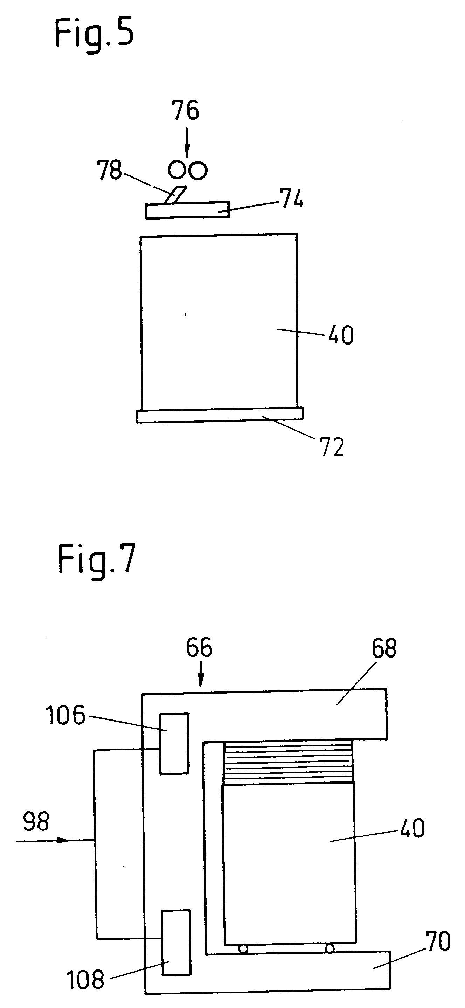

Die Bandablage 42 ist eine autonome Maschine mit eigenem Antrieb (wie nachfolgend näher erklärt) und kann frei gegenüber der Karde 28 aufgestellt werden. Sie umfasst ein Gestell 66 (Fig. 4) mit einer Kopfpartie 68, einer Fusspartie 70 und einer dazwischen liegenden Kannenaufnahmestation (kein Bezugszeichen). Die wesentlichen Arbeitselemente der Bandablage sind in Fig. 5 schematisch dargestellt und bestehen aus
- einem Drehteller 72 in der Fusspartie 70,
- einem Trichterrad 74 in der Kopfpartie 68, und
- einem Einzugswalzenpaar 76 oberhalb (oder unterhalb) des Trichterrades 74.

Die Kanne 40 wird auf den Drehteller 72 gestellt und gegen Rotation gegenüber dem Teller 72 befestigt (nicht gezeigt). Der Drehteller 72 wird vom nachfolgend beschriebenen Bandablagenantrieb um eine senkrechte Achse gedreht, wobei die Kanne 40 mitgenommen wird. Das Trichterrad 74 wird vom Bandablagenantrieb unabhängig vom Drehteller um eine zweite senkrechte Achse gedreht (z.B. nach EP-A-394 773), wodurch das Faserband 40 über eine Führung 78 in die Kanne 40 eingeführt und darin in Windungen vorgegebener Form abgelegt wird. Das Band wird durch die Walzen des Paares 76 in den Führungskanal 78 eingeführt, wobei jede Walze des Paares um die eigene waagrechte Längsachse vom Bandablagenantrieb gedreht wird.

Eine Ausführung eines Antriebes für die Karde selbst ist z.B. in der deutschen Gebrauchsmusteranmeldung G 9312638.7 vom 24. August 1993 beschrieben. Der Antrieb umfasst einen Hauptantriebsmotor (nicht gezeigt) für den Tambour 32 (Fig. 1 ) und das Wanderdeckelgerät 34. Der Hauptantriebsmotor kann zum Beispiel nach EP-A-557 242 ausgeführt werden. Es sind zusätzlich ein Antriebsmotor 80 für den Abnehmer 36 und die anderen Arbeitselemente des Auslaufes 38 bis und mit dem Stufenwalzenpaar 62 (Fig. 3) vorgesehen, was in Fig. 1 schematisch durch die vom Antrieb 80 ausgehenden Pfeile angedeutet wird.

Bezüglich des Antriebs für die Bandablage 42 kann von einem Antrieb nach DE-C-37 34 425 ausgegangen werden. Demnach umfasst der Bandablagenantrieb entweder einen Drehstrommotor oder allenfalls zwei Drehstrommotoren, der (bzw. davon jeder) mittels eines der Bandablage eigens zugeordneten Frequenzumrichters gesteuert wird. Die Ausgangsfrequenz des Umrichters wird grundsätzlich anhand eines von Faserbandlieferwalzen erzeugten Signals festgelegt. Die Bandlieferwalzen nach DE-C-37 34 425 entsprechen den Stufenwalzen 62 (Fig. 3). Es wird aber nach DE-C-37 34 425 zusätzlich ein Signal von einem die Spannung einer Faserbandschlaufe abtastenden Sensors zur Feineinstellung herangezogen, um einen Regelkreis zu bilden. Die Bandablage ist gegenüber der Textilmaschine (die in der DE-Patentschrift nicht gezeigt ist) praktisch "vollautonom", da es möglich ist, von den Bandlieferwalzen ein Signal zu gewinnen, ohne in die Konstruktion der Maschine selbst eingreifen zu müssen. Dafür aber ist es notwendig, in der Bandablage Elemente vorzusehen, die eigentlich in der Maschine schon vorhanden sein müssen, wobei die notwendigen Steuersignale für die Bandablage eigentlich auch in der Maschine selbst schon "vorhanden" sind.

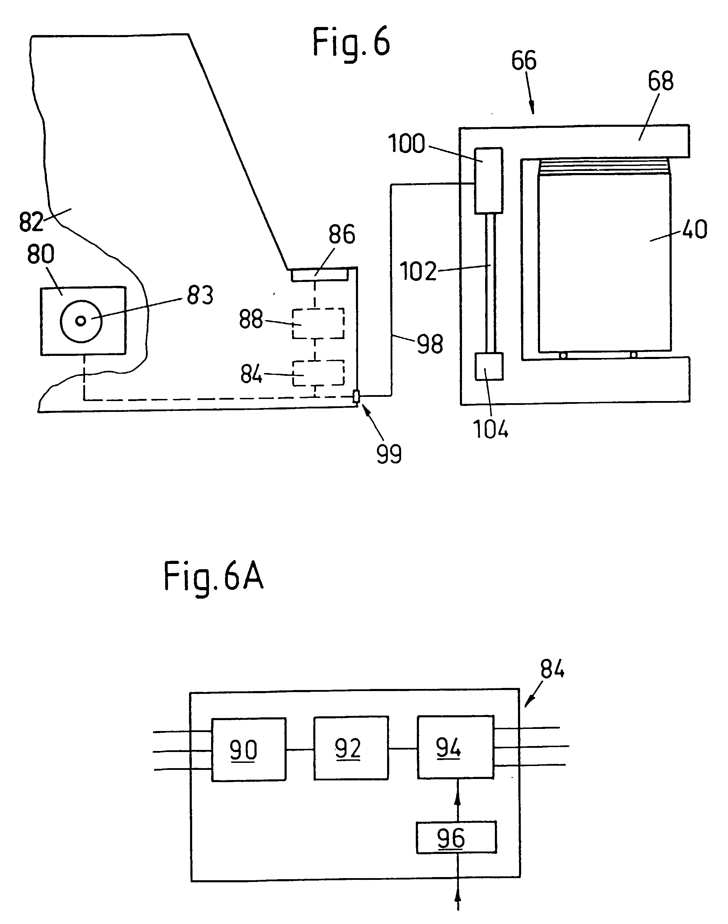

Fig. 6 zeigt schematisch eine erste Variante nach EP-A-671 355, wobei das Bezugszeichen 82 auf die Verschalung der Auslaufpartie der Karde deutet und auf den Antrieb für den Auslauf nochmals mit dem Bezugszeichen 80 hingewiesen wird. In einer kostengünstigen Ausführung umfasst dieser Antrieb 80 einen stufenlos steuerbaren, wartungsfreien Asynchronmotor 83 (z.B. einen Kurzschlussläufermotor), der mittels eines Frequenzumrichters 84 mit elektrischen Energie gespeist wird. Die Ausgangsfrequenz des Umrichters 84 ist über ein Eingabegerät 86 einstellbar, das in einer programmierbaren Steuerungseinheit 88 der Karde integriert ist. Eine solche Anordnung ist heutzutage allgemeiner Stand der Technik für die Karde, d.h. die Elemente 80,83,84,86 und 88 (oder ihre Aequivalente) sind für eine moderne Karde nahezu unerlässlich.

Der Umrichter 84 umfasst normalerweise einen Gleichrichter 90 (Fig. 6A), der Wechselstrom von einem 3-Phasen Netz erhält und Gleichstrom an einen Zwischenkreis 92 liefert. Ein steuerbarer Leistungsteil 94 wandelt Gleichstrom aus dem Zwischenkreis 92 in Wechselstrom mit einer Frequenz, die von einer Umrichtersteuerung anhand eines Signals von der Einheit 88 bestimmt wird. Dieses Wechselstrom (einphasig oder dreiphasig) wird dem Motor 83 gespeist.

Die Synchrondrehzahl des Motors 83 wird eindeutig durch die Ausgangsfrequenz des Frequenzumrichters 84 vorgegeben. Die effektive Drehzahl der Motorwelle wird aber nicht allein in Abhängigkeit von dieser Synchrondrehzahl bestimmt. Diese Drehzahl hängt auch von der Last ab, welcher der Motor unterworfen ist, das heisst im Motor 83 entsteht zwischen dem Rotor und dem Stator ein sogenannter "Schlupf". Diese Tatsache allein würde zu gar keinem Problem führen, wenn der Schlupf voraussehbar wäre. In der Praxis ändert sie sich aber kontinuierlich als eine Funktion der momentanen Lastverhältnissen, die nicht genau vorhersehbar sind.

Nach den vorbekannten Systemen sind dementsprechend Sondermassnahmen der einen oder der anderen Art ergriffen worden, um die sich ständig ändernden Verhältnissen Rechnung zu tragen, was Aufwand und Kosten Verursacht hat.

Obwohl der Schlupf nicht kontrollierbar ist, kann das "Schlupfverhalten" (d.h. der Verlauf der Änderungen des Schlupfes in Abhängigkeit von Laständerungen) sowohl in der Richtung wie auch in der Grössenordnung geschätzt werden. Im wesentlichen handelt es sich in der Auslaufpartie um Reibungsverluste und Verdichtungsarbeit, zum Beispiel als das Faserband durch den Trichter 64 (Fig. 3) gezogen wird. Solche Lastkomponenten sind abhängig vom Bandtiter und Liefergeschwindigkeit. Über einen Liefergeschwindigkeitsbereich bis 300 m/min kann man Asynchronmotoren wählen, die unter diesen Umständen einen Schlupf von maximal 3% aufweisen.

Der Frequenzumrichter 84 wird normalerweise derart ausgelegt werden, dass er imstande ist, die Bandablage auch mit der nötigen Energie zu versorgen, dies weil die Karde zum Antreiben einer mit ihr mechanisch gekoppelten Bandablage konstruiert werden muss. Es besteht kein Problem daher, die für eine "autonome" Bandablage erforderliche Energie über zum Beispiel eine Steckdose 99 der Kardenverschalung 82 vom Ausgang des Umrichters abzuzweigen und über einen Kabel 98 an einen Antriebsmotor 100 der Bandablage zu speisen. Der Motor 100 ist ein einfacher Drehstromgetriebemotor, der ähnlich dem Motor 83 direkt anhand der vom Frequenzumrichter erhaltenen Energie gesteuert wird.

In der Variante nach Fig. 6 entspricht die Anordnung insofern der Bandablage nach DE-C-37 34 425 als der Motor 100 die Arbeitselemente der Kopfpartie direkt und die Arbeitselemente der Fusspartie indirekt über einen Abtrieb 102 und eine Übertragungsmittel 104 treibt. In dieser Variante ist das Schlupfverhalten des Motors 100 dem entsprechenden Verhalten des Motors 83 gleich, da es durch die gleichen Betriebsparameter bestimmt wird. Das heisst, das der zu erwartende Unterschied zwischen dem im Motor 83 vorkommenden Schlupf und dem im Motor 100 vorkommenden Schlupf annähernd konstant ist, was keine wesentlichen Fehlverzüge (Verzugsschwankungen) bedeutet. Dieses überraschende Ergebnis einer näheren Betrachtung des Gesamtsystems ermöglicht den Einsatz eines Motors 100, der ähnlich dem Motor 83 kostengünstig gewählt werden kann.

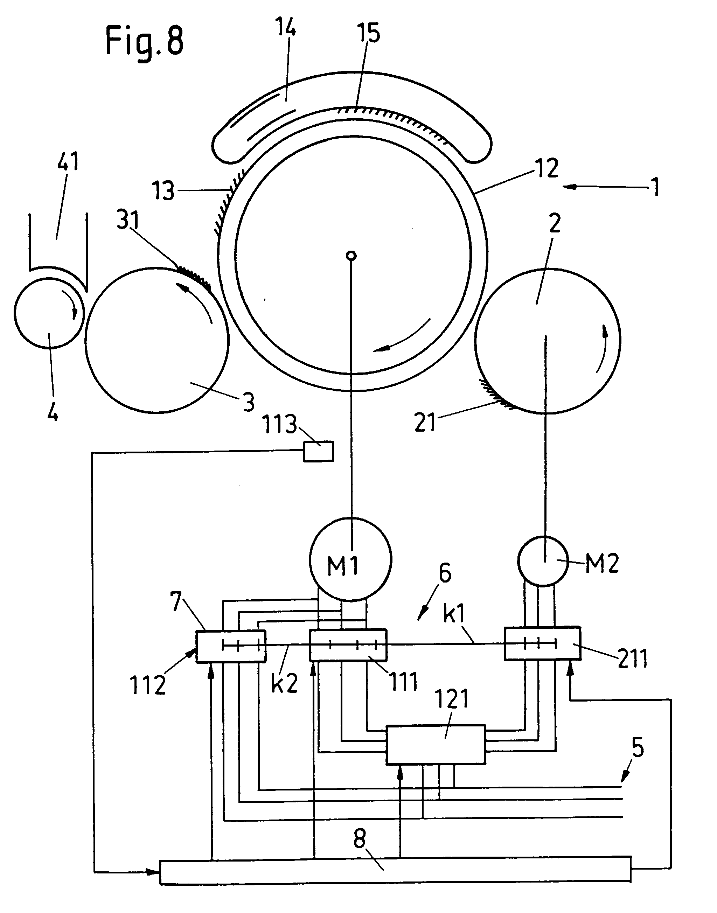

Die Variante nach Fig. 7 weicht insofern von der Variante nach Fig. 6 ab, als je ein Motor 106 bzw. 108 für die Arbeitselemente der Kopfpartie 68 und der Fusspartie 70 vorgesehen ist. Jeder Motor 106, 108 des Bandablagenantriebes wird direkt vom Frequenzumrichter 84 über den Kabel 98 gespeist. Die vom Motor 108 aufzubringende Leistung ändert sich in dieser Variante in Abhängigkeit von der Kannenfüllung, was zu einer Änderung des Schlupfunterschiedes zwischen dem Motor 106 und dem Motor 108 in der Grössenordnung von 1 bis 2% führen kann. Diese Variation im Laufe des Füllens einer Kanne ist aber nicht gravierend - sie führt bloss zu einer kleineren Änderung in den Windungsabstände zwischen der ersten und der letzten Windung, was für die Weiterverarbeitung ohne Bedeutung ist.

Verzugsänderungen können durch Wechselräder in den Getrieben bewerkstelligt werden. In der bevorzugten Lösung ist kein Wechselrad in dem Getriebe zwischen dem Motor 83 und dem Stufenwalzenpaar 62 vorgesehen, da sonst bei einer Änderung der Über- bzw. Untersetzungsverhältnisse an dieser Stelle eine entsprechende Änderung der verzugsbestimmenden Wechselrädern des Motors 100 bzw. 106 durchgeführt werden muss, wenn keine Verzugsänderung vorgesehen ist.

Das System nach EP-A-671 355 ist anwendbar, sofern die Anforderung erfüllt wird, dass das Schlupfverhalten des Antriebs für den Maschinenauslauf dem Schlupfverhalten des Bandablageantriebs gleich ist. Diese Anforderung kann auch dann erfüllt werden, wenn im Auslauf nicht alle Elemente durch einen einzigen Motor angetrieben werden. Im Normalfall wird aber der Auslauf vom Abnehmer bis zur Lieferung durch nur eine Antriebsquelle in Bewegung gesetzt werden.

Die Karde 1, die schematisch in Fig. 8 gezeigt ist, weist die drei Funktionselemente Speisewalze, Trommel oder Tambour und Abnehmer auf. Ein Faserstrom gelangt aus einem Schacht (in Fig. 8 nicht gezeigt), zur Speiseeinheit, bestehend aus einer Speisemulde 41 und einer Speisewalze 4, von dieser auf den Vorreisser 3. Nach der Vorauflösung gelangen die Fasern auf die Trommel 12, welche mit dem Wanderdeckel 14 zusammenwirkt, wobei die eigentliche Kardierung stattfindet. Anschliessend nimmt der Abnehmer 2 einen Faserstrom von der Trommel 12 ab und formt ein Vlies, welches in einem Auslauf zu einem Band verdichtet wird und dann einer Kanne zugeführt wird. Dazu sind gewisse Funktionselemente mit Garnituren 13,15,21,31 versehen.

Die Speisewalze 4 ist eine relativ kleine Einheit, welche wenig Leistung benötigt und daher bezüglich Leistung einen relativ schwachen Elektromotor mit einer eigenen passenden Leistungselektronik aufweist. Auf diesen wird nicht weiter eingegangen.

Die Trommel 12 stellt mechanisch und elektrisch die höchsten Anforderungen bezüglich Leistung. Sie hat wie bereits oben beschrieben, gut 500 kg bis 1000 kg oder noch mehr an Masse bei einem äusseren Durchmesser von etwa 0.8 m bis 1.3 m und einer Breite von etwa 1 m. Sie wird mit einem Antriebsmotor mit etwa 4 bis 8 kW Leistung bei einer Drehzahl von etwa 300 bis 850 U/min. betrieben. Dies ergibt eine Oberflächengeschwindigkeit am Umfang von ca. 1200 m/min. bis 2100 m/min. Die Trommel 12 wirkt direkt zusammen mit dem Wanderdeckel 14, welcher einen Teil des Umfanges der Trommel 12 überstreicht. Die Bewegungsrichtung des Wanderdeckels 14 ist gegenläufig oder gleichläufig zur Trommel 1. Wanderdeckel 14, Vorreisser 3 und Trommel 12 der zweiten Arbeitsgruppe sind mechanisch gekoppelt und miteinander angetrieben. Das Hochfahren und das Abbremsen der Trommel 12 benötigt wegen der Trägheit eine bestimmte Zeit. Daher wird die Trommel 12 selten, respektive so wenig wie irgend möglich gestoppt.

Der Abnehmer 2 ist erheblich kleiner als die Trommel 12 und wird mit einer etwa 10 bis 20 mal kleineren Oberflächengeschwindigkeit am Umfang als die Trommel 12 betrieben. Die benötigte Leistung des Antriebsmotors des Abnehmers 2 bzw. der Auslaufgruppe ist daher etwa die Hälfte derjenigen der Trommel 12.

Wegen diesen verschiedenartigen Bedingungen weisen Speisewalze 4, Trommel 12 mit den zugehörenden Aggregaten und Abnehmer 2 mit dem Auslauf je einen eigenen Elektromotor auf. Speisewalze 4 und Abnehmer 2 müssen laufend kontrolliert gesteuert werden, um die Qualität des Faserstromes, resp. des entstehenden Bandes, zu garantieren (z.B. nach EP-A-275471). Sie werden daher durch je einen Frequenzumrichter gesteuert gespiesen.

Bei der Verarbeitung eines gegebenen Fasersortimentes weist die Trommel 12 hingegen immer die gleiche Betriebsdrehzahl auf. Sie kann daher während dem Betrieb fest ans Netz geschaltet werden. Eine eigentliche gesteuerte Speisung wird erfindungsgemäss nur beim Hochlauf und/oder beim Abbremsen eingesetzt.

In der Fig. 8 ist auch ein Schaltschema für die Steuerung. Speisung und Schaltung der Antriebsmotoren M1 der Trommel 12 und M2 des Abnehmers 2 dargestellt. Erfindungsgemäss wird nun nur ein Frequenzumrichter 121 für beide Antriebsmotoren M1, M2 benützt. Dazu ist ein Umschalter 6 vorgesehen, welcher zwischen dem Frequenzumrichter 121 für beide Antriebsmotoren M1, M2 zwischengeschaltet ist. Der Umschalter 6 umfasst ein erstes Schaltelement 111, welches zwischen Antriebsmotor M1 und Frequenzumrichter 121, und ein zweites Schaltelement 211, welches zwischen demselben Frequenzumrichter 121 und dem zweiten Antriebsmotor M2 angeordnet ist. Diese beiden Schaltelemente 111 und 211 sind miteinander mechanisch oder elektronisch gekoppelt k1, so dass immer nur ein Antriebsmotor M1, M2 an den Frequenzumrichter 121 geschaltet ist. Der Umschalter 6 schaltet entweder mit seinem zweiten Schaltelement 211 den Antriebsmotor M2 des Abnehmers oder aber mit seinem ersten Schaltelement 111 den Antriebsmotor M2 der Trommel 12 an den Frequenzumrichter 121. Ein zweiter Schalter 7 mit einem dritten Schaltelement 112, mit reiner Ein/Aus-Funktion, ist zwischen Netz 5 und dem Antriebsmotor M1 der Trommel eingesetzt. Auch dieser zweite Schalter 7 ist vorteilhafterweise mechanisch oder elektrisch insoweit mit dem ersten Schalter 6 über die Verbindung k2 gekoppelt, dass der Antriebsmotor M1 nicht ans Netz 5 geschaltet sein kann, solange er über den ersten Schalter 6 vom Frequenzumrichter 121 gespiesen wird. Der zweite Schalter 7 kann allerdings den Antriebsmotor M1 auch unabhängig vom Schalter 6 vom Netz 5 abtrennen. Der erste Schalter 6, der zweite Schalter 7 und der Frequenzumrichter werden durch die eigentliche Kardensteuerung 8 überwacht und gesteuert. Die Kardensteuerung 8 wird ergänzt durch einen Sensor 113 zur Drehzahlerfassung an der Trommel 12.

Die Funktionsweise dieser Schaltung ist folgende:
Zum Hochlaufen der Karde sollte zuerst die Antriebsgruppe mit Vorreisser 3, Trommel 12 und Wanderdeckel 14 ihre Betriebsgeschwindigkeit aufweisen, bevor durch die Speisewalze 4 ein Faserstrom geliefert werden kann. Der Abnehmer 2 wird erst benötigt, wenn Trommel 12 und Speisewalze 4 in Betrieb sind.

Das Hochlaufen der Trommel 12 mit den zugehörenden Aggregaten geschieht ohne Faserstromtransport und stellt andere Anforderungen als ihr eigentlicher Betrieb mit Faserstromtransport und - Bearbeitung resp. Kardierung. Erst nach dem Hochlaufen der Trommel 12 wird die Speisewalze 4 in Betrieb gesetzt und ein Faserstrom zugeführt. Der Abnehmer 2 wird erst benötigt, wenn die Fasern auf der Trommel 12 bearbeitet sind und der Faserstrom resp. das Band mit konstanter Dicke abgenommen werden soll.

Daher wird nun zuerst mittels dem ersten Schalter 6 das erste Schaltelement 111 so geschaltet, dass der Motor M1 der Trommel 12 über den Frequenzumrichter 121 gespiesen wird und der Motor M2 des Abnehmers 2 von ihm getrennt ist. Nun wird die Trommel 12 durch den Frequenzumrichter 121 hochgefahren, bis sie ihr Betriebsdrehzahl zumindest annähernd erreicht hat. Dabei kann der Frequenzumrichter 121 auf die Leistung des Motores M2 des Abnehmers 2 dimensioniert sein. Er genügt trotzdem für den Hochlauf der Trommel 12, da diese während dem Hochlauf frei von einem Faserstrom ist und daher mit weniger Leistung auskommt. Die Grössenordnung der benötigten Leistungen des Motores M1 beim Hochlauf der zweiten Antriebsgruppe und des Motores M2 während dem Betrieb ist ähnlich, was aber für die Anwendung dieser Erfindung nicht unbedingt erforderlich ist. Die Hochlaufzeit der Trommel 12 wird einfach der Leistung des Umrichters angepasst und daher etwas länger. Dies spielt aber im betrieb keine Rolle, da die Trommel 12 so selten wie möglich abgestellt und wieder hochgefahren werden muss und die Hochlaufzeit sowieso im Bereich zwischen etwa 30 und 200 Sekunden liegt.

Sobald die Trommel 12 eine vorbestimmte Drehzahl oder ihre Betriebsdrehzahl erreicht hat, wird sie durch den ersten Schalter 6 vom Frequenzumrichter getrennt und über den zweiten Schalter 7 direkt ans Netz 5 geschaltet. Sobald die Trommel 12 vom Frequenzumrichter 121 getrennt ist, kann der Antriebsmotor M2 des Abnehmers 2 durch den ersten Schalter 6 über das zweite Schaltelement 211 an den Frequenzumrichter 121 geschaltet werden. Der Abnehmer wird nun beschleunigt und durch den Frequenzumrichter 121 gesteuert gespiesen. Während dem Betrieb der Karde bleibt diese Schaltung so stehen.

Die Kardensteuerung 8 kann so programmiert sein, dass bei einer vorbestimmten Drehzahl etwas unterhalb der Betriebsdrehzahl umgeschaltet wird. Die Endphase des Hochlaufs der Trommel 12 bis zur Betriebsdrehzahl wird somit durchgeführt, nachdem der Motor M1 an das Netz geschaltet ist. Solange die vorbestimmte Drehzahl innerhalb eines von den Eigenschaften des Motores M1 abhängigen Bereiches von bis etwa ± 20% von der Betriebsdrehzahl liegt, entstehen durch den hervorgerufenen Stromstoss keine Schäden.

Bei einem allfälligen Beenden des Betriebes der Karde geschieht der Ablauf im Prinzip umgekehrt. Das heisst, zuerst wird die Speisewalze 4 gestoppt, damit kein Faserstrom mehr zugeführt wird. Anschliessend wird, sobald am Auslauf kein Band mehr erscheint, der Abnehmer 2 elektrisch gebremst und gestoppt. Im Falle, dass die Karde ganz abgestellt werden soll, so wird der Abnehmer 2 dann vom Frequenzumrichter 121 getrennt und der Antriebsmotor M1 der Trommel 12 an den Frequenzumrichter 121 geschaltet und durch diesen elektrisch abgebremst. Auch dabei genügt die Leistung des Frequenzumrichters ohne merkliche Einbusse für den Betrieb durchaus.

Es empfiehlt sich, einen Sensor 113 als Kontrollelement zur Überwachung der Drehzahl der Trommel 12 resp. des Motores M1 vorzusehen. Dieser Sensor 113 registriert die Drehzahl der Trommel 12, resp. des Motores M1. Sein Ausgangssignal wird in der Kardensteuerung 8 ausgewertet und zur Steuerung resp. Schaltung benützt. Dies dient insbesondere als Sicherung und blockiert bei Bedarf den zweiten Schalter 7. Es verhindert, dass der Motor M1 mittels dem dritten Schaltelement 112 an das Netz 5 geschaltet werden kann, solange der Motor M1 den Bereich der Betriebsdrehzahl nicht erreicht hat.

Die Kardensteuerung 8 kann den Motor M1 abschalten, wenn er mit einer sehr niedrigen Drehzahl läuft. Somit kann mittels einer,,negativen Frequenz" gebremst werden, ohne dabei das Risiko einer Drehrichtungsumkehr einzugehen.

Durch dieses Verfahren und diese Schaltungsanordnung erübrigt sich die übliche aufwendige Leistungselektronik mit je einem eigenen Frequenzumrichter für den Antrieb der Trommel 12 und den Antrieb des Abnehmers 2 der Karde resp. speziellen Mitteln zum Beschleunigen und Abbremsen der Trommel 12. Dies ergibt erhebliche bauliche und finanzielle Einsparungen, da an deren Stelle nur ein Frequenzumrichter und zwei Schalter mit zusammen drei Schaltelementen benötigt werden. Zudem kann der Frequenzumrichter 121 auf die kleinere Leistung des zweiten Motores M2 des Antriebes des Abnehmers 2 ausgelegt sein. Die Verwendung dieser leistungsmässig schwächeren elektronischen Bauelemente ist billiger als dies bei einer Auslegung für die volle Leistung eines herkömmlichen Trommelantriebes nötig wäre.

Der Frequenzumrichter 121 kann als Multi-Tasking-Element verwendet werden. Die vorgesehenen Aufgaben umfassen das Hochlaufen bzw. das Bremsen vom Tambour 12 (Fig. 8) bzw. 32 (Fig.1) das Hochlaufen, Antreiben und Bremsen der Abnehmers 2 (Fig. 8) bzw. 36 (Fig.1) und die Speisung der Bandablage 42 (Fig.1). Die Kardensteuerung 8 kann so gestaltet werden, dass sie den Frequenzumrichter 121 von der einen zur nächsten Aufgabe umschaltet. Die Steuerung einer Karde ist normalerweise derart ausgeführt, dass sie den momentanen Zustand der Karde überwacht und daher in der Lage ist, die erforderliche Umschaltung des Frequenzumrichters vorzunehmen. Die bevorzugte Ausführung des Antriebssystems für die Karde beruht auf einer Modifikation der Anordnung, die in Fig. 5 der EP-A-701 012 gezeigt ist. die eigentliche Ausführung nach der genannten Schrift wäre in einer Karde nach dieser Erfindung nicht zu gebrauchen, weil die Schrift drei Frequenzumrichter zeigt, die jeweils der Speisewalze, dem Tambour und dem Abnehmer zugeordnet sind. Die vorliegende Erfindung sieht das Eliminieren von einem dieser Frequenzumrichter vor (entweder des Umrichters 17 nach EP-A-701 012 oder des darin gezeigten Umrichters 16). Es ist nicht wesentlich, den ,,Umrichter des Tambours" zu eliminieren - das Wesentliche liegt darin, dass nur ein Umrichter sowohl für den Tambour als auch für den Auslauf erforderlich ist. Der Tambour kann aber problemlos ohne einen Umrichter angetrieben werden, nachdem er auf die Betriebsdrehzahl hochgelaufen worden ist. Der Auslauf ist aber vorzugsweise im Normalbetrieb von einem Umrichter anzutreiben. Es ist daher zweckmässig, die vom "gemeinsamen Umrichter" lieferbare Ausgangsleistung der Leistungsnachfrage des Abnehmers beim Normalbetrieb auszulegen, mit anderen Worten, der in EP-A-701 012 gezeigte Umrichter 16 zu behalten und der Umrichter 17 des gleichen Falls wegzulassen.

Wie in EP-A-701 012 beschrieben, sind die Umrichter eines Kardenantriebssystems vorzugsweise mit,,lntelligenz" versehen, d.h. die umfassen die eigenen Datenverarbeitungs- (Computer)Einheiten, die Daten mit dem Hauptsteuerungscomputer (d.h. mit der Steuerung 8 nach Fig. 1) austauschen können. Der Steuercomputer 8 muss somit nur Befehle an die intelligenten Umrichter (oder Motorsteuereinheiten) senden, die je der Speisewalze, bzw. dem Tambour oder dem Abnehmer zugeordnet sind. Die Steuerzentrale 8 der Maschine übernimmt daher die Aufgabe der Überwachung der Karde als ganzes, um geeignete Befehle aufgrund ihrer Programmierung zu erzeugen. Diese Programme beruhen auf der Technologie der Maschine. Die einzelnen Motorsteuereinheiten sind derart angeordnet, dass sie diese Befehle auslegen können, und diese Einheiten sind ihren jeweiligen Motoren angepasst, so dass sie anhand der Befehle geeignete Steuersignale erzeugen können, um die Befehle mittels der ausgewählten Motoren auszuführen. Somit ist es nicht erforderlich, die Parameter des Antriebssystems im Hauptsteuercomputer (8) der Maschine einzuprogrammieren. Es ist daher nicht notwendig, den Hauptcomputer mit ausreichender Rechenkapazität zu versehen, um das Überwachen des Momentanzustandes vom Antriebssystem und das Erzeugen der geeigneten Signale für die Motoren zu ermöglichen - letztere Aufgabe ist den Motorsteuereinheiten ,,delegiert".

Die Erfindung ist nicht auf eine Anordnung eingeschränkt, worin der Tambour und Vorreisser antriebsmässig miteinander gekoppelt sind. Für den Vorreisser könnte einen eigenen Antriebsmotor vorgesehen werden - vgl. z.B. EP-A-701 012.

Die nun vorliegende Erfindung ist natürlich auch nicht auf die Kombination mit dem Prinzip nach EP-A-671 355 eingeschränkt. Die Bandablage kann im Auslauf "integriert" sein oder völlig autonom angetrieben werden.

Die Schaltelemente 111, 112, 211 können als bewegbare Elemente oder als elektronische Schalter (z.B. Halbleiterelemente) ausgeführt werden. Im ersten Fall muss die Steuerung 8 eine Aktorik betätigen, um die Schaltelemente zu bewegen. Im zweiten Fall müssen geeignete Schaltsignale an die elektronischen Schalter gesandt werden, um ihre jeweiligen Zustände zu ändern. Die Elemente 111, 112, 211 können natürlich in einer gemeinsamen Baugruppe (Schalteinheit) realisiert werden.

Der "Netz" ist natürlich an und für sich kein wesentliches Element der erfinderischen Lösung, wobei eine Schaltungsanordnung nach der Erfindung mit Mittel versehen werden sollte, um die Anordnung mit einem "Netz" für die Übertragung von elektrischer Energie zu verbinden. Wo elektrisch gebremst werden soll, kann allenfalls die Energieübertragung in beiden Richtungen stattfinden. Das Mittel zum Verbinden mit dem Netz ist in Fig. 8 nicht speziell gezeigt, wäre aber über die Leitungen 5 sowohl mit dem Umrichter 121 als auch mit dem Schaltelement 112 verbunden.

Der "Netz" weist gegenüber dem Umrichter einen "begrenzten Frequenzbereich" auf; normalerweise kann er nur eine einzige Grundfrequenz (50 oder 60 Hz) liefern. Nachdem die Konstruktion des Motors M1 und die Grundfrequenz des Netzes bestimmt worden sind, besteht keine Möglichkeit mehr, die Synchrondrehzahl des Motors M1 beim Normalbetrieb (am Netz) zu beeinflussen. Um trotzdem die Betriebsdrehzahl der Trommel 12 wählbar zu machen, kann eine einstellbare Drehzahlübertragung (ein variables Getriebe) zwischen dem Motor M1 und der Trommel 12 vorgesehen werden. Die Übertragung könnte z.B. auswechselbare Pulleys (Räder) verschiedener Durchmesser umfassen, wodurch unter einigen vorgegebenen Betriebsdrehzahlen der Trommel 12 gewählt werden kann. Die Karde muss abgestellt werden, um eine Änderung der gewählten Betriebsdrehzahl (durch das Auswechseln eines Pulleys) zu ermöglichen.

Der gemeinsame Frequenzumrichter (in Fig. 8, Umrichter 121) kann vorzugsweise etwas mehr als die ,,Leerlaufleistung" des Trommelantriebes liefern, d.h. etwas mehr als die Leistung, welche vom Trommelantrieb bei der vorgesehenen Betriebsdrehzahl, ohne Faserdurchfluss verbraucht wird. Je kleiner der zur Verfügung stehende "Leistungsüberschuss" (gegenüber der Leerlaufleistung), desto länger dauert das Hochlaufen. Da die Nennleistung des Frequenzumrichters 121, bei Dimensionierung für den Auslaufantrieb, deutlich oberhalb der Leerlaufleistung des Trommelantriebes liegt, kann letzterer innerhalb einer vernünftigen Zeit (z.B. in weniger als drei Minuten) hochgefahren werden. Die Beschleunigung der Trommel wird vorzugsweise sowieso begrenzt, um ein "Überschwingen" beim Übergang vom Hochlaufen zum Leerlaufen zu vermeiden.

Der Begriff ,,Netz" umfasst in dieser Beschreibung jede geeignete Quelle elektrischer Energie vorgegebener Frequenz. In der bevorzugten Anordnung ist diese Quelle durch ein Versorgungssystem gebildet, das zur Belieferung einer Anlage oder sogar mehrerer Anlagen ausgelegt ist. Es ist kaum sinnvoll, für jede Karde eine eigene "Quelle" vorzusehen, aber eine solche Lösung ist nach der Erfindung nicht ausgeschlossen, da die Form der Quelle (ausser ihres begrenzten Frequenzbereiches) für die Erfindung keine Rolle spielt.

Durch eine geeignete Dimensionierung des Frequenzumrichters 121 wäre es im Prinzip möglich, beide Motoren M1, M2 mindestens zeitweise anzutreiben. In der bevorzugten Lösung wird aber das gleichzeitige Antreiben ausgeschlossen.

Die Erfindung ist nicht auf die Anwendung des Frequenzumrichters sowohl zum Hochlaufen als auch zum Abbremsen der Trommel 12 eingeschränkt. Es wäre z.B. möglich, die Trommel mit einer mechanischen Bremse zu versehen oder eine sogenannte Gegenstrombremsung vorzusehen, wobei das Element 113 zur Überwachung dienen könnte.

## Patentansprüche

1. Verfahren zum Hochlaufen und/oder Abbremsen einer Karde mit einem ersten Motor (M1) für die Trommel (12) und einem zweiten Motor (M2) für den Abnehmer (2) und einem Frequenzumrichter (121), gekennzeichnet durch folgende Schritte:
a) zum Hochfahren
wird der erste Motor (M1) für die Trommel (12) an den Frequenzumrichter (121) geschaltet, worauf die Trommel (12) hochgefahren wird, bis sie ihre Betriebsgeschwindigkeit mindestens annähernd erreicht hat; worauf der erste Motor (M1) ) vom Frequenzumrichter (121) getrennt und an das Netz (5) geschaltet wird, wobei der zweite Motor (M2) an den Frequenzumrichter (121) geschaltet wird, nachdem der erste Motor (M1) davon getrennt wurde,
und/oder
b) zum Abbremsen
wird der zweite Motor (M2) für den Abnehmer (2) vom Frequenzumrichter (121) abgebremst und dann vom Frequenzumrichter (121) getrennt, wonach der erste Motor (M1) an den Frequenzumrichter (121) geschaltet wird, worauf der erste Motor (M1) elektrisch abgebremst wird.

2. Schaltungsanordnung zum Betreiben einer Karde, mit einem ersten Motor (M1) zum Antrieb der Trommel (12) und einem zweiten Motor (M2) zum Antrieb des Abnehmers (2) und einem Frequenzumrichter (121), dadurch gekennzeichnet, dass der erste und der zweite Motor (M1,M2) durch den Frequenzumrichter (121) abwechselnd speisbar und steuerbar sind.

3. Schalltungsanordnung nach Anspruch 2, dadurch gekennzeichnet, dass ein steuerbarer Schalter (6) vorgesehen ist, um den Frequenzumrichter (121) selektiv mit den Motoren (M1,M2) zu verbinden.

4. Schaltungsanordnung nach Anspruch 3, dadurch gekennzeichnet, dass der Schalter (6) mit einem ersten Schaltelement (111) zwischen dem Frequenzumrichter (121) und dem ersten Motor (M1) und einem zweiten Schaltelement (211) zwischen dem Frequenzumrichter (121) und dem zweiten Motor (M2) so angeordnet ist, dass gleichzeitig nur einer der beiden Motoren (M1,M2) mit dem Frequenzumrichter (121) verbunden ist.

5. Schaltungsanordnung nach Anspruch 4, dadurch gekennzeichnet, dass ein drittes Schaltelement (112) zwischen Netz (5) und dem ersten Motor (M1) angeordnet ist und den ersten Motor (M1) mit dem Netz (5) verbindbar macht.

6. Schaltungsanordnung nach Anspruch 5, dadurch gekennzeichnet, dass die Schaltelemente miteinander mechanisch oder elektrisch in der Weise gekoppelt sind, dass der erste Motor (M1) nur entweder über das erste Schaltelement (111) an den Frequenzumrichter (121) oder über das dritte Schaltelement (112) an das Netz (5) schaltbar ist.

7. Schaltungsanordnung nach einem der Ansprüche 2 bis 6, dadurch gekennzeichnet, dass ein Kontrollelement (113) zur Überwachung der Drehzahl des ersten Motores (M1) vorhanden ist.

8. Schaltungsanordnung nach einem der Ansprüche 2 bis 7, dadurch gekennzeichnet, dass eine Steuerung (8) für die Schaltungsanordnung vorhanden ist.

9. Schaltungsanordnung nach einem der Ansprüche 2 bis 8, dadurch gekennzeichnet, dass der Frequenzumrichter (121) leistungsmässig auf den zweiten Motor (M2) ausgelegt ist.

10. Die Kombination einer Karde mit einer Schaltungsanordnung nach einem der Ansprüche 2 bis 9, und einer dieser Karde zugeordneten Bandablage, wobei die Karde mit einem Antrieb für die bandliefernden Elemente und die Bandablage mit einem eigenen Antrieb versehen sind, dadurch gekennzeichnet, dass sowohl der Antrieb für die bandliefernden Elemente der Maschine, wie auch der Antrieb für die Bandablage, mindestens je einen frequenzgesteuerten Drehstrommotor umfassen, und zum Speisen dieser Motoren ein gemeinsamer Frequenzumrichter vorgesehen ist.
